# EUROPEAN PATENT APPLICATION

(11) **EP 4 325 374 A1**
(43) Date of publication of application: **21.02.2024**
(21) Application number: 22832020.6
(22) Date of filing: 28.06.2022
(51) Int. Cl.: G06F 16/18

(54) **DATA TRAFFIC CONTROL METHOD AND RELATED DEVICE**

(30) Priority: 29.06.2021 CN 202110732604
(71) Applicant: Huawei Technologies Co., Ltd., Longgang Shenzhen, Guangdong 518129 (CN)
(72) Inventor: CHEN, Yongxian, Shenzhen, Guangdong 518129 (CN); WANG, Huanzhuo, Shenzhen, Guangdong 518129 (CN); DENG, Yong, Shenzhen, Guangdong 518129 (CN); HU, Xilin, Shenzhen, Guangdong 518129 (CN)
(74) Representative: Huawei European IPR
(86) International application number: PCT/CN2022/101800
(87) International publication number: WO 2023/274206

(57) **Abstract**

This application provides a data traffic control method, applied to a database system. The database system includes a primary device. The primary device is communicatively connected to M secondary devices and a client, and M is a positive integer. The method includes: obtaining consensus-reaching efficiency when log backup is performed between the primary device and the M secondary devices, where the consensus-reaching efficiency is related to at least one of the following information: a consensus-reaching log bandwidth and a consensus-reaching time overhead; and determining data traffic information of the primary device based on the consensus-reaching efficiency. The data traffic information is used to control traffic of data that is injected by the client and that is received by the primary device, and the traffic is positively correlated with the consensus-reaching efficiency. In this application, the consensus-reaching efficiency (which includes, for example, a consensus-reaching latency and the end-to-end consensus-reaching log bandwidth) is used as a control target based on features of a consensus algorithm, to determine and control service injection traffic of the client, so that stability of control effect is improved, parameters do not need to be adjusted, and implementation is easy.

## Description

This application claims priority to Chinese Patent Application No. 202110732604.5, filed with the China National Intellectual Property Administration on June 29, 2021 and entitled "DATA TRAFFIC CONTROL METHOD AND RELATED APPARATUS", which is incorporated herein by reference in its entirety.

### TECHNICAL FIELD

This application relates to the computer field, and in particular, to a data traffic control method and a related apparatus.

### BACKGROUND

In a distributed system, to improve availability and reliability, a plurality of secondary devices are allocated to a primary device. The primary device may replicate logs to the plurality of secondary devices based on a multi-copy mechanism. Although the multi-copy mechanism improves the reliability and the availability, a new problem occurs, namely, how to ensure consensus between a plurality of copies. In other words, the plurality of copies are consistent for any proposal (proposal), and how to reach consensus on the proposal needs to use a consensus algorithm. A Paxos algorithm is synonymous with distributed consensus. Currently, a commonly used consensus algorithm is developed according to the Paxos algorithm. It can be simply understood that the primary device proposes a proposal, and then sends the proposal to other secondary devices. The other secondary devices may accept or reject the proposal according to the consensus algorithm. When the primary device determines an acceptance response from a majority of secondary devices, it indicates that consensus is reached on the proposal. The proposal is a log. Consensus-based log replication indicates that the primary device of a database replicates the log to the other secondary devices and uses the consensus algorithm. When one log receives responses from more than half (or close to 50%) of the secondary devices, it indicates that consensus is reached on the log.

A rate of a data sender may not be equal to a rate of a data receiver. If the sending rate of the sender is extremely high, the receiver may not process all data, data that is not processed is stored in a buffer. If traffic is heavy, a packet can only be discarded. System performance is limited. Consequently, if a large amount of data is accumulated or packets are lost, end-to-end service performance may degrade sharply. Traffic control is to control traffic of the sender, so that the traffic of the sender can match traffic of the receiver, especially during high concurrency. Traffic injection is restricted to prevent the system from breaking down due to excessive system pressure caused by a large quantity of requests, to ensure normal service availability.

In the field of database traffic control, in most of conventional technologies, the traffic control is performed between the primary device and a client based on queue high and low watermarks, and control effect is poor.

### SUMMARY

According to a first aspect, an embodiment of this application provides a data traffic control method, applied to a database system. The database system includes a primary device. The primary device is communicatively connected to M secondary devices and a client, and M is a positive integer. The method includes: obtaining consensus-reaching efficiency when log backup is performed between the primary device and the M secondary devices, where the consensus-reaching efficiency is related to at least one of the following information: a consensus-reaching log bandwidth and a consensus-reaching time overhead; and determining data traffic information of the primary device based on the consensus-reaching efficiency. The data traffic information is used to control traffic of data that is injected by the client and that is received by the primary device, and the traffic is positively correlated with the consensus-reaching efficiency.

The consensus-reaching efficiency may be understood as efficiency of reaching consensus between the primary device and the secondary device during primary/secondary log replication.

Reaching consensus may be understood as that the primary device receives acknowledgment ACK that is for one log and that is sent by a plurality of secondary devices. When a quantity of secondary devices that send the acknowledgment ACK and a quantity of primary devices exceed half of a total quantity (or another threshold) of the primary devices and the secondary devices that are in a current primary/secondary system, it may be considered that consensus is reached, for the log, between the primary device and the secondary device. For example, the primary/secondary system includes one primary device and two secondary devices. When the primary device completes consensus, and the primary device receives acknowledgment ACK sent by at least one secondary device, it may be considered that consensus is reached between the primary device and the secondary device. For another example, the primary/secondary system includes one primary device and four secondary devices. When the primary device completes consensus, and the primary device receives acknowledgment ACK sent by at least two secondary devices, it may be considered that consensus is reached between the primary device and the secondary devices.

The consensus-reaching efficiency may be related to the consensus-reaching log bandwidth. In an implementation, the consensus-reaching efficiency is positively correlated with the consensus-reaching log bandwidth. In other words, when other information remains unchanged, a higher consensus-reaching log bandwidth between the primary device and the plurality of secondary devices indicates higher consensus-reaching efficiency.

The consensus-reaching efficiency may be related to the consensus-reaching time overhead. In an implementation, the consensus-reaching efficiency is negatively correlated with the consensus-reaching time overhead. In other words, when other information remains unchanged, a higher consensus-reaching time overhead between the primary device and the plurality of secondary devices indicates lower consensus-reaching efficiency.

After the consensus-reaching efficiency is obtained, the data traffic information of the primary device is determined based on the consensus-reaching efficiency. The data traffic information is used to control the traffic of the data that is injected by the client and that is received by the primary device, and the traffic is positively correlated with the consensus-reaching efficiency. In other words, when other information remains unchanged, higher consensus-reaching efficiency between the primary device and the plurality of secondary devices indicates higher traffic of the data that is injected by the client and that is received by the primary device.

In embodiments of this application, the consensus-reaching efficiency (which includes, for example, a consensus-reaching latency, and the end-to-end consensus-reaching log bandwidth) is used as a control target based on features of a consensus algorithm, to determine and control service injection traffic of the client, so that control effect is specific and stable.

In the conventional technology (for example, MySQL group replication), traffic control is performed based on a quota. All nodes periodically transmit information such as queue statistics to each other, and the traffic control is performed after each node calculates and processes received queue statistical information. About 10 parameters are set for the MySQL group replication, and parameter adjustment needs to be performed for different scenarios. However, in embodiments of this application, a size of data transmission traffic may be controlled directly based on historical log data, parameters do not need to be adjusted, and implementation is easy

In a possible implementation, the method further includes: obtaining information about a plurality of logs, between the primary device and the M secondary devices in a historical sampling time period, on which consensus is reached, where the information about the plurality of logs includes log sizes of the plurality of logs; and determining a bandwidth of a consensus operation based on the log sizes of the plurality of logs and a length of the historical sampling time period. Specifically, sampling may be performed based on a specific historical sampling time cycle (for example, one second), and a size of each log on which consensus is reached in one cycle, and a time overhead that is for each log to reach consensus and that is from a writing start moment to a consensus-reaching moment are sampled. In addition, the consensus-reaching log bandwidth is obtained through calculation based on the size of each log on which consensus is reached in the historical sampling time cycle and a time length of the historical sampling time cycle. The consensus-reaching log bandwidth may be denoted as bw1. For example, the consensus-reaching log bandwidth bw1 may be equal to a result of dividing a sum of sizes of logs on which consensus is reached in the historical sampling time cycle by duration of the historical sampling time cycle.

In a possible implementation, the method further includes: obtaining the information about the plurality of logs, between the primary device and the M secondary devices in the historical sampling time period, on which consensus is reached, where the information about the plurality of logs includes a time overhead for each of the plurality of logs to reach consensus; and determining a time overhead of the consensus operation based on the time overhead for each of the plurality of logs to reach consensus. Specifically, the sampling may be performed based on the specific historical sampling time cycle (for example, one second), and the size of each log on which consensus is reached in one cycle and the time overhead that is for each log to reach consensus and that is from the writing start moment to the consensus-reaching moment are sampled. In addition, the consensus-reaching time overhead is calculated based on an average value of time overheads of the logs on which consensus is reached in the historical sampling time cycle, for example, the consensus-reaching time overhead may be denoted as lat.

In a possible implementation, the method further includes: obtaining log playback bandwidths of the M secondary devices when the log backup is performed between the primary device and the M secondary devices; the determining data traffic information of the primary device based on the consensus-reaching efficiency includes: determining the data traffic information of the primary device based on the consensus-reaching efficiency and the log playback bandwidth, where the traffic is positively correlated with the log playback bandwidth.

In a possible implementation, the obtaining log playback bandwidths of the M secondary devices when the log backup is performed between the primary device and the M secondary devices includes: obtaining information about a plurality of logs, between the primary device and the M secondary devices in the historical sampling time period, on which consensus is reached and data playback is completed, where the information about the plurality of logs, between the primary device and the M secondary devices in the historical sampling time period, on which consensus is reached and data playback is completed includes log sizes of the plurality of logs; and determining the log playback bandwidth based on the log sizes of the plurality of logs and the length of the historical sampling time period.

Log playback may be applying the log to a data system.

In a possible implementation, the information about the plurality of logs, between the primary device and the M secondary devices in the historical sampling time period, on which consensus is reached and data playback is completed is obtained. The information about the plurality of logs, on which data playback is completed includes log sizes of the plurality of logs. In addition, the log playback bandwidth is determined based on the log sizes of the plurality of logs and the length of the historical sampling time period.

For example, when the primary device replicates the log to another secondary device, the another secondary device may reply with an acknowledgment ACK message, and an index of the log, of the secondary device, on which playback is performed is carried in the ACK message. The primary device may obtain indexes of logs, of all secondary devices, on which playback is performed. An overall system log playback bandwidth in the sampling cycle may be obtained based on the size of each log, and the overall system log playback bandwidth is denoted as bw2.

In a possible implementation, the historical sampling time period is a sampling cycle in a plurality of sampling cycles before a current moment, and an interval between the sampling cycle and the current moment is less than a threshold; or historical sampling time periods are a plurality of sampling cycles before a current moment.

For example, a sampling cycle 1, a sampling cycle 2, a sampling cycle 3, a sampling cycle 4, a sampling cycle 5, a sampling cycle 6, a sampling cycle 7, a sampling cycle 8, and a sampling cycle 9 are included before the current moment. The sampling cycle 1 is a sampling cycle closest to the current moment in time, so that the historical sampling time period may be the sampling cycle 1. The historical sampling time period may alternatively be a union set or one subset of a union set of the sampling cycle 1, the sampling cycle 2, the sampling cycle 3, the sampling cycle 4, the sampling cycle 5, the sampling cycle 6, the sampling cycle 7, the sampling cycle 8, and the sampling cycle 9. This is not limited herein.

The threshold may be related to a time length of one sampling cycle. For example, the threshold may be the sampling cycle or a multiple of the sampling cycle. When the threshold is the sampling cycle, the historical sampling time period is a sampling cycle in the plurality of sampling cycles before the current moment, and the interval between the sampling cycle and the current moment is minimum. It should be understood that a specific threshold is not limited in this application. The threshold is set to be smaller, and a quantity of sampling cycles in the historical sampling time period is set to be smaller. The threshold is set to be larger, and the quantity of sampling cycles in the historical sampling time period is set to be larger.

In a possible implementation, the data traffic information may include traffic control direction information and traffic control step information. The traffic control direction information indicates a change direction (for example, indicating whether the traffic becomes larger or smaller) of the traffic of the data that is injected by the client and that is received by the primary device. The traffic control step information indicates a change value of the traffic of the data that is injected by the client and that is received by the primary device, so that the traffic of the data that is injected by the client and that is received by the primary device may be determined based on the change direction of the traffic of the data and the traffic control step information, and further the traffic of the data that is injected by the client and that is received by the primary device may be controlled based on the data traffic information.

According to a second aspect, this application provides a data traffic control apparatus. The data traffic control apparatus is used in a database system. The database system includes a primary device, the primary device is communicatively connected to M secondary devices and a client, and M is a positive integer. The apparatus includes:
an obtaining module, configured to obtain consensus-reaching efficiency when log backup is performed between the primary device and the M secondary devices, where the consensus-reaching efficiency is related to at least one of the following information: a consensus-reaching log bandwidth and a consensus-reaching time overhead; and
a data traffic determining module, configured to determine data traffic information of the primary device based on the consensus-reaching efficiency, where the data traffic information is used to control traffic of data that is injected by the client and that is received by the primary device, and the traffic is positively correlated with the consensus-reaching efficiency.

In a possible implementation, the consensus-reaching efficiency is positively correlated with the consensus-reaching log bandwidth, and the consensus-reaching efficiency is negatively correlated with the consensus-reaching time overhead.

In a possible implementation, the obtaining module is further configured to:
obtain information about a plurality of logs, between the primary device and the M secondary devices in a historical sampling time period, on which consensus is reached, where the information about the plurality of logs includes log sizes of the plurality of logs; and
determine a bandwidth of a consensus operation based on the log sizes of the plurality of logs and a length of the historical sampling time period.

In a possible implementation, the obtaining module is further configured to:
obtain the information about the plurality of logs, between the primary device and the M secondary devices in the historical sampling time period, on which consensus is reached, where the information about the plurality of logs includes a time overhead for each of the plurality of logs to reach consensus; and
determine a time overhead of the consensus operation based on the time overhead for each of the plurality of logs to reach consensus.

In a possible implementation, the obtaining module is further configured to:
obtain log playback bandwidths of the M secondary devices when the log backup is performed between the primary device and the M secondary devices; and
the data traffic determining module is specifically configured to:
   determine the data traffic information of the primary device based on the consensus-reaching efficiency and the log playback bandwidth, where the traffic is positively correlated with the log playback bandwidth.

In a possible implementation, the obtaining module is specifically configured to:
obtain information about a plurality of logs, between the primary device and the M secondary devices in the historical sampling time period, on which consensus is reached and data playback is completed, where the information about the plurality of logs, between the primary device and the M secondary devices in the historical sampling time period, on which consensus is reached and data playback is completed includes log sizes of the plurality of logs; and
determine the log playback bandwidth based on the log sizes of the plurality of logs and the length of the historical sampling time period.

In a possible implementation, the historical sampling time period is a sampling cycle in a plurality of sampling cycles before a current moment, and an interval between the sampling cycle and the current moment is less than a threshold; or historical sampling time periods are a plurality of sampling cycles before a current moment.

In a possible implementation, the data traffic information includes traffic control direction information and traffic control step information. The traffic control direction information indicates a change direction of the traffic of the data that is injected by the client and that is received by the primary device, and the traffic control step information indicates a change value of the traffic of the data that is injected by the client and that is received by the primary device.

According to a third aspect, this application provides a data traffic control apparatus. The apparatus may include a processor, the processor is coupled to a memory, the memory stores program instructions, and when the program instructions stored in the memory are executed by the processor, the method in any one of the first aspect or the implementations of the first aspect is implemented. For details about steps performed by the processor in possible implementations of the first aspect, refer to the first aspect. Details are not described herein again.

According to a fourth aspect, this application provides a computer-readable storage medium. The computer-readable storage medium stores a computer program, and when the computer program is run on a computer, the computer is enabled to perform the method in the implementations of the first aspect.

According to a fifth aspect, this application provides a circuit system. The circuit system includes a processing circuit, and the processing circuit is configured to perform the method in any one of the first aspect or the implementations of the first aspect is implemented.

According to a sixth aspect, this application provides a computer program. When the computer program is run on a computer, the computer is enabled to perform the method in the implementations of the first aspect.

According to a seventh aspect, this application provides a chip system. The chip system includes a processor, configured to implement functions in the foregoing aspects, for example, sending or processing data and/or information in the foregoing methods. In a possible design, the chip system further includes a memory. The memory is configured to store program instructions and data that are necessary for a server or a communication device. The chip system may include a chip, or may include a chip and another discrete device.

Embodiments of this application provide the data traffic control method, applied to the database system. The database system includes the primary device. The primary device is communicatively connected to the M secondary devices and the client, and M is the positive integer. The method includes: obtaining the consensus-reaching efficiency when the log backup is performed between the primary device and the M secondary devices, where the consensus-reaching efficiency is related to the at least one of the following information: the consensus-reaching log bandwidth and the consensus-reaching time overhead; and determining the data traffic information of the primary device based on the consensus-reaching efficiency. The data traffic information is used to control the traffic of the data that is injected by the client and that is received by the primary device, and the traffic is positively correlated with the consensus-reaching efficiency. In embodiments of this application, the optimal consensus-reaching efficiency (which includes, for example, the end-to-end consensus-reaching latency, and the end-to-end consensus-reaching log bandwidth) is used as the control target based on the features of the consensus algorithm, to adaptively control the service injection traffic, so that control effect is specific and stable, the parameters do not need to be adjusted, and the implementation is easy.

### BRIEF DESCRIPTION OF DRAWINGS

FIG. 1A is a schematic diagram of an architecture of a database system;
FIG. 1B is a schematic diagram of an architecture of a distributed database system according to an embodiment of this application;
FIG. 1C is a schematic diagram of another architecture of a distributed database system according to an embodiment of this application;
FIG. 1D is a schematic diagram of an application architecture according to an embodiment of this application;
FIG. 1E is a schematic diagram of a system architecture according to an embodiment of this application;
FIG. 2 is a schematic flowchart of a data traffic control method according to an embodiment of this application;
FIG. 3 is a schematic flowchart of a data traffic control method according to an embodiment of this application;
FIG. 4 is a schematic diagram of determining a control value according to an embodiment of this application;
FIG. 5 is a schematic diagram of a structure of a data traffic control apparatus according to an embodiment of this application;
FIG. 6 is a schematic diagram of a computer-readable storage medium according to an embodiment of this application; and
FIG. 7 is a schematic diagram of a computer device according to an embodiment of this application.

### DESCRIPTION OF EMBODIMENTS

The following describes embodiments of this application with reference to the accompanying drawings. It is clear that the described embodiments are merely some but not all of embodiments of this application. Persons of ordinary skill in the art may learn that the technical solutions provided in embodiments of this application are also applicable to a similar technical problem as a technology develops and a new scenario emerges.

In the specification, claims, and accompanying drawings of this application, the terms such as "first" and "second" are intended to distinguish between similar objects but do not necessarily indicate a specific order or sequence. It should be understood that the data termed in such a way are interchangeable in proper circumstances so that embodiments described herein can be implemented in orders other than the order illustrated or described herein. Moreover, the terms "include", "contain" and any other variants mean to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Naming or numbering of steps in this application does not mean that steps in a method procedure need to be performed according to a time/logical sequence indicated by the naming or the numbering. An execution sequence of steps in a procedure that have been named or numbered may be changed based on a technical objective to be implemented, provided that same or similar technical effect can be achieved.

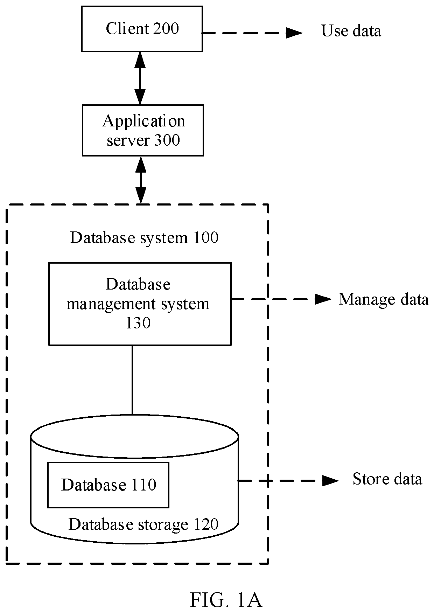

A method provided in embodiments of this application may be applied to a database system (database system) 100 shown in FIG. 1A. The database system 100 is communicatively connected to an application server 300, to provide a database service for the application server 300. The application server 300 is communicatively connected to a client 200. The client 200 is usually an application deployed on user equipment. The client 200 initiates a service request to the application server 300 to implement a specific function, for example, downloading or uploading data. Data related to the client 200 is stored in the database system 100. How does the application server 300 need to operate the data related to the client 200 in a process of responding to a service request of the client 200? (for example, querying data, adding data, updating data, and deleting data), may be implemented by sending an operation request to the database system 100.

FIG. 1A shows a typical logical architecture of the database system 100. According to FIG. 1A, the database system 100 includes a database 110 and a database management system (database management system, DBMS) 130.

The database 110 is an organized data set stored in a data storage (data storage) 120, namely, an associated data set organized, stored, and used based on a particular data model. Based on different data models used for organizing data, the data may be divided into a plurality of types, for example, relational data (relational data), graph (graph) data, and time series (time series) data. The relational data is data modeled by using a relational model, and is usually represented as a table, where a row in the table represents a set of associated values of an object or entity. The graph data, "graph" for short, is used to represent a relationship, for example, a social relationship, between objects or entities. The time series data, time series data for short, is a data column recorded and indexed in a time sequence, and is used to describe status change information of an object in a time dimension.

The database management system 130 is a core of a database system, and is system software used to organize, store, and maintain data. The client 200 can access the database 110 by using the database management system 130. A database administrator can also maintain a database by using the database management system. The database management system 130 provides various functions for the client 200 to establish, modify, and query the database. The client 200 may be an application or user equipment running an application. The functions provided by the database management system 130 may include but are not limited to the following items: (1) Data definition function: The database management system 130 provides a data definition language (data definition language, DDL) to define a structure of the database 110, where the DDL is used to depict a database framework, and may be stored in a data dictionary. (2) Data access function: The database management system 130 provides a data manipulation language (data manipulation language, DML) to implement basic access operations on the database 110, for example, retrieval, insertion, modification, and deletion. (3) Database operation management function: The database management system 130 provides a data control function to effectively control and manage operation of the database 110, to ensure correct and effective data. (4) Database establishment and maintenance functions: include functions such as loading of initial data of the database, dump, restoration, and reorganization of the database, and monitoring and analysis of system performance. (5) Transmission of the database: The database management system provides transmission of processed data, to implement communication between the client and the database management system, and the database management system usually coordinates with an operating system to complete the transmission of the processed data.

The database storage 120 may include but is not limited to a solid-state disk (solid-state disk, SSD), a disk array, a cloud storage, or non-transitory computer-readable storage medium of another type.

In this embodiment of this application, the client 200 may initiate a service request to the application server 300. A data service is deployed in the application server 300, and is used to respond to the service request initiated by the client 200. In an embodiment, the data service deployed in the application server 300 may verify validity of access of the client 200, record a session after verification succeeds, and convert the service request initiated by the client 200 into a data operation request for the database 110, for example, a query statement. Further, the data service may perform real-time statistics collection and control on system resources occupied by different clients 200.

It should be understood that persons skilled in the art may understand that one database system may include components more or less than those shown in FIG. 1A, or include components different from those shown in FIG. 1A. FIG. 1A merely shows components more related to implementations disclosed in embodiments of the present invention.

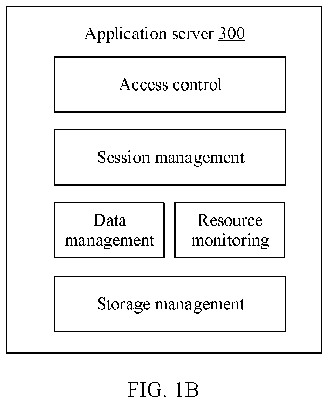

The following describes an embodiment of the application server 300 provided in this application with reference to FIG. 1B.

Functions implemented by the application server 300 may include but are not limited to access control, session management, data management, resource monitoring, storage management, and the like. The access control may control validity of access of a client and control a bandwidth. The session management may be performed to manage a session of a client that successfully accesses the application server 300. The data management may convert a service request from a client into an operation request for a database. The resource monitoring may perform real-time statistics collection and control on system resources occupied by different clients. The storage management may convert an operation request for the database into an operation request supported or executable by a database system, for example, a database query statement ("query" for short), and the query may be a structured query language (structured query language, SQL) query. It should be noted that the application server 300 may convert the service request into a query supported or executable by the database system at one time or several times. A specific conversion process belongs to the conventional technology in the art.

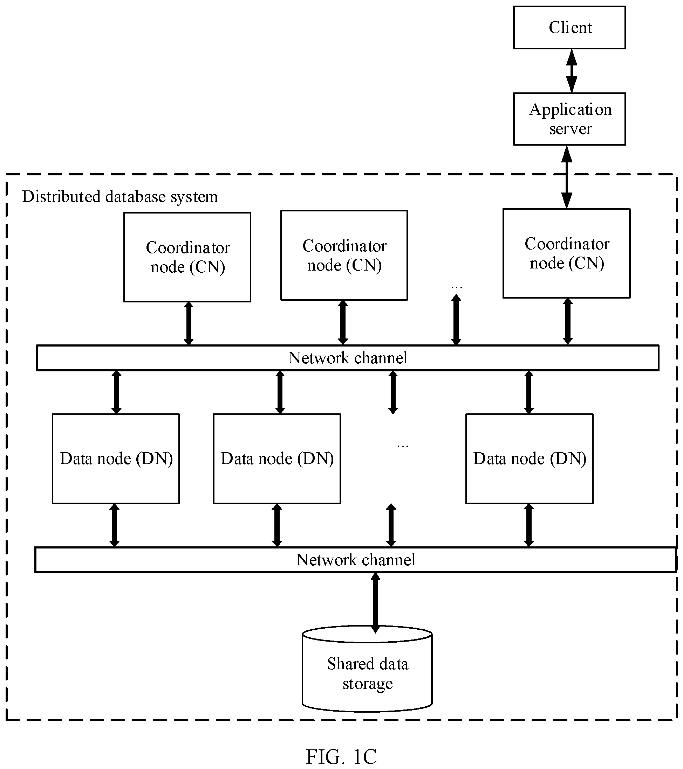

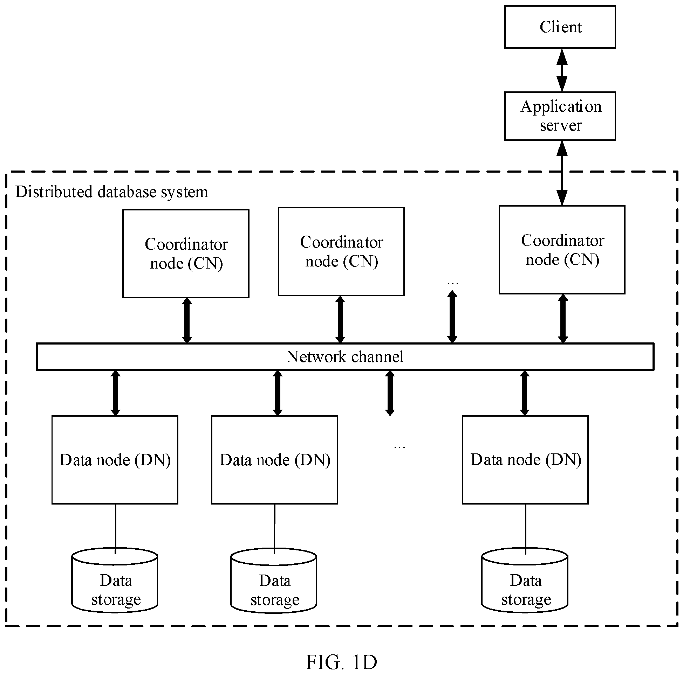

The database system provided in embodiments of this application may be a distributed database system (distributed database system, DDBS), for example, a database system with a massively parallel processing (massively parallel processing, MPP) architecture. The following describes the DDBS with reference to FIG. 1C and FIG. 1D.

FIG. 1C is a schematic diagram of a distributed database system with a shared storage (shared storage) architecture, including one or more coordinator nodes (coordinator node, CN) and a plurality of data nodes (data node, DN). The DDBS may further include another component, for example, a global transaction manager (global transaction manager, GTM). The CN and the DN communicate with each other through a network channel. The CN may generate, based on a received query, for example, a query from an application server, an execution plan corresponding to the query, and distribute, based on the execution plan, the query to a corresponding DN for execution. The CN may further generate a query result based on an execution result of the DN. In an embodiment, the network channel may include network devices such as a switch, a router, and a gateway. The CN and the DN work together to perform functions of a database management system and provide services such as database retrieval, insertion, modification, and deletion for a client. In an embodiment, the database management system is deployed on each CN and each DN. A shared data storage stores data that can be shared by a plurality of DNs, and the DN may perform, through the network channel, a read/write operation on the data in the data storage. The shared data storage may be a shared storage array. The CN and the DN in the distributed database system may be physical machines, such as database servers, or may be virtual machines (virtual machine, VM) or containers (container) running on abstract hardware resources. In an embodiment, the CN and the DN are the virtual machines or the containers, the network channel is a virtual switching network, and the virtual switching network includes a virtual switch. The database management systems deployed on the CN and the DN are DBMS instances (instance). The DBMS instance may be a process or a thread. These DBMSs work together to perform functions of a database relational system. In another embodiment, the CN and the DN are physical machines, and the network channel includes one or more switches. The switch is a storage area network (storage area network, SAN) switch, an Ethernet switch, an optical fiber switch, or another physical switching device.

FIG. 1D is a schematic diagram of a distributed database system with a shared-nothing (shared-nothing) architecture. Each DN has a dedicated hardware resource (for example, a CPU, a memory, and a data storage). A CN and a DN communicate with each other through a network channel. For understanding the network channel, refer to the corresponding description in FIG. 1C. In this system, data is distributed to each DN based on a database model and an application characteristic. A query task is divided by the CN into several parts, to be executed concurrently on a plurality of DNs. All DNs perform calculation coordinately and are used as a whole to provide a database service. All communication functions are implemented on a high-bandwidth network interconnection system. Similar to those in the distributed database system with the shared storage architecture described in FIG. 1C, the CN and the DN herein may be physical machines or virtual machines.

In all embodiments of this application, the data storage (data storage) of the database system includes but is not limited to a solid-state drive (solid-state drive, SSD), a disk array, or a non-transitory computer-readable medium of another type. Although a database is not shown in FIG. 1C and FIG. 1D, it should be understood that the database is stored in the data storage. Persons skilled in the art may understand that a database system may include components more or less than those shown in FIG. 1A to FIG. 1D, or include components different from those shown in FIG. 1A to FIG. 1D. FIG. 1A to FIG. 1D merely show components more related to implementations disclosed in embodiments of this application. However, persons skilled in the art may understand that a distributed database system may include any quantities of CNs and DNs. Database management system functions of CNs and DNs may be separately implemented by using an appropriate combination of software, hardware, and/or firmware on the CNs and DNs.

In embodiments of this application, the distributed database system may provide an application (APP) deployment service for an application developer. Specifically, an application may be deployed on a node, for example, the virtual machine, in the distributed database system. The virtual machine may include one or more data nodes DNs and a corresponding data storage (for example, the shared data storage in FIG. 1C or the data storage in FIG. 1D). The application may send a service request to the application server, and the application server processes the service request. For example, the application server converts the service request of the application into one or more data operation requests supported by or executable in the database system, and sends the data operation request to the distributed database system. In response to the data operation request, a DN corresponding to the application in the distributed database system performs an operation on the data in the data storage.

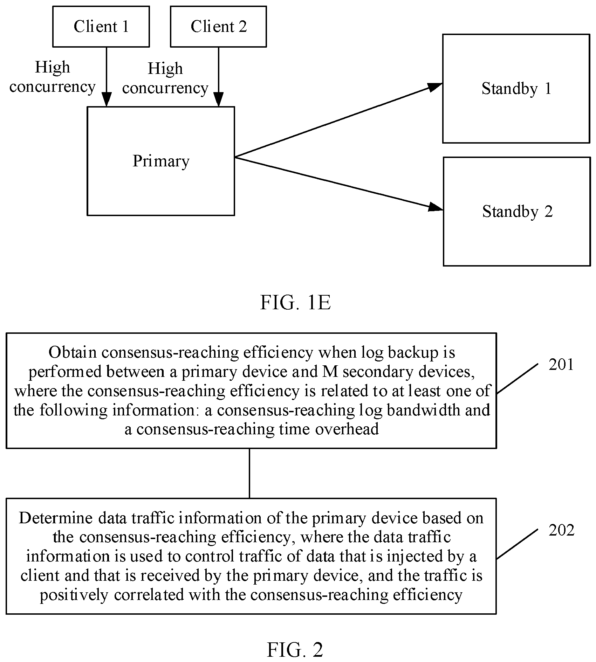

FIG. 1E is a diagram of an application architecture according to an embodiment of this application. As shown in FIG. 1E, the application architecture may include a primary device, a secondary device 1, and a secondary device 2 (it should be understood that more secondary devices may be included, and two secondary devices are used as examples in FIG. 1E). One or more clients (for example, a client 1 and a client 2 in FIG. 1E) may inject service traffic to the primary device. A database performs primary/secondary log replication according to a consensus algorithm and synchronizes a log to the secondary device 1 and the secondary device 2. Due to network congestion, a physical distance, or the like, a network latency between the primary device and the secondary device may be high. The client may inject the traffic into the database at high concurrency.

It should be understood that a scenario shown in FIG. 1E is merely an example, and the technical solutions in embodiments of this application may be applied to any consensus algorithm-based database primary/secondary replication scenario.

FIG. 2 is a schematic flowchart of a data traffic control method according to an embodiment of this application. The data traffic control method provided in this embodiment of this application may be applied to a database system. The database system includes a primary device, the primary device is communicatively connected to M secondary devices and a client, and M is a positive integer. As shown in FIG. 2, the method may include the following steps.

201: Obtain consensus-reaching efficiency when log backup is performed between the primary device and the M secondary devices, where the consensus-reaching efficiency is related to at least one of the following information: a consensus-reaching log bandwidth and a consensus-reaching time overhead.

Step 201 may be performed by the primary device. In other words, the primary device obtains the consensus-reaching efficiency when the log backup is performed between the primary device and the M secondary devices. Alternatively, step 201 may be performed by another computing node in a primary device database. This is not limited herein.

The consensus-reaching efficiency may be understood as efficiency of reaching consensus between the primary device and the secondary device during primary/secondary log replication.

Reaching consensus may be understood as that the primary device receives acknowledgment ACK that is for one log and that is sent by a plurality of secondary devices. When a quantity of secondary devices that send the acknowledgment ACK and a quantity of primary devices exceed half of a total quantity (or another threshold) of primary devices and secondary devices that are in a current primary/secondary system, it may be considered that consensus is reached, for the log, between the primary device and the secondary device. For example, the primary/secondary system includes one primary device and two secondary devices. When the primary device completes consensus, and the primary device receives acknowledgment ACK sent by at least one secondary device, it may be considered that consensus is reached between the primary device and the secondary device. For another example, the primary/secondary system includes one primary device and four secondary devices. When the primary device completes consensus, and the primary device receives acknowledgment ACK sent by at least two secondary devices, it may be considered that consensus is reached between the primary device and the secondary devices.

The consensus-reaching efficiency may be related to the consensus-reaching log bandwidth. In an implementation, the consensus-reaching efficiency is positively correlated with the consensus-reaching log bandwidth. In other words, when other information remains unchanged, a higher consensus-reaching log bandwidth between the primary device and the plurality of secondary devices indicates higher consensus-reaching efficiency.

In a possible implementation, when the primary device in the database system performs the log replication according to a consensus algorithm, a writing start moment, a log size, and a consensus-reaching moment of each log are separately recorded. The writing start moment is a moment when the log is generated after service injection traffic is injected to the primary device. The consensus-reaching moment is a moment when the primary device replicates the log to each secondary device, each secondary device replies with acknowledgment ACK after each secondary device receives the log, and then the primary device receives acknowledgment ACK from more than half of the secondary devices.

In a possible implementation, information about a plurality of logs, between the primary device and the M secondary devices in a historical sampling time period, on which consensus is reached may be obtained, and the information about the plurality of logs includes log sizes of the plurality of logs. A bandwidth of a consensus operation is determined based on the log sizes of the plurality of logs and a length of the historical sampling time period.

Specifically, the sampling may be performed based on a specific sampling time cycle (for example, one second), and the size of each log on which consensus is reached in one cycle, and a time overhead that is for each log to reach consensus and that is from the writing start moment to the consensus-reaching moment are sampled. In addition, the consensus-reaching log bandwidth is obtained through calculation based on the size of each log on which consensus is reached in the historical sampling time cycle and a time length of the historical sampling time cycle. The consensus-reaching log bandwidth may be denoted as bw1. For example, the consensus-reaching log bandwidth bw1 may be equal to a result of dividing a sum of sizes of logs on which consensus is reached in the historical sampling time cycle by duration of the historical sampling time cycle.

The consensus-reaching efficiency may be related to the consensus-reaching time overhead. In an implementation, the consensus-reaching efficiency is negatively correlated with the consensus-reaching time overhead. In other words, when other information remains unchanged, a higher consensus-reaching time overhead between the primary device and the plurality of secondary devices indicates lower consensus-reaching efficiency.

In a possible implementation, the information about the plurality of logs, between the primary device and the M secondary devices in the historical sampling time period, on which consensus is reached may be obtained, and the information about the plurality of logs includes a time overhead for each of the plurality of logs to reach consensus. A time overhead of the consensus operation is determined based on the time overhead for each of the plurality of logs to reach consensus.

Specifically, the sampling may be performed based on the specific sampling time cycle (for example, one second), and the size of each log on which consensus is reached in one cycle, and the time overhead that is for each log to reach consensus and that is from the writing start moment to the consensus-reaching moment are sampled. In addition, the consensus-reaching time overhead is calculated based on an average value of time overheads of the logs on which consensus is reached in the historical sampling time cycle, for example, the consensus-reaching time overhead may be denoted as lat.

In a possible implementation, the consensus-reaching efficiency may be related to the consensus-reaching log bandwidth. In a possible implementation, the consensus-reaching efficiency may be related to the consensus-reaching time overhead. In a possible implementation, the consensus-reaching efficiency may be related to the consensus-reaching log bandwidth and the consensus-reaching time overhead.

In a possible implementation, the historical sampling time period is a sampling cycle in a plurality of sampling cycles before a current moment, and an interval between the sampling cycle and the current moment is less than a threshold; or historical sampling time periods are a plurality of sampling cycles before a current moment.

For example, a sampling cycle 1, a sampling cycle 2, a sampling cycle 3, a sampling cycle 4, a sampling cycle 5, a sampling cycle 6, a sampling cycle 7, a sampling cycle 8, and a sampling cycle 9 are included before the current moment. The sampling cycle 1 is a sampling cycle closest to the current moment in time, so that the historical sampling time period may be the sampling cycle 1. The historical sampling time period may alternatively be a union set or one subset of a union set of the sampling cycle 1, the sampling cycle 2, the sampling cycle 3, the sampling cycle 4, the sampling cycle 5, the sampling cycle 6, the sampling cycle 7, the sampling cycle 8, and the sampling cycle 9. This is not limited herein.

202: Determine data traffic information of the primary device based on the consensus-reaching efficiency, where the data traffic information is used to control traffic of data that is injected by the client and that is received by the primary device, and the traffic is positively correlated with the consensus-reaching efficiency.

In this embodiment of this application, after the consensus-reaching efficiency is obtained, the data traffic information of the primary device is determined based on the consensus-reaching efficiency. The data traffic information is used to control the traffic of the data that is injected by the client and that is received by the primary device, and the traffic is positively correlated with the consensus-reaching efficiency. In other words, when other information remains unchanged, higher consensus-reaching efficiency between the primary device and the plurality of secondary devices indicates higher traffic of the data that is injected by the client and that is received by the primary device.

In a possible implementation, the data traffic information may alternatively be determined based on a log playback bandwidth of the secondary device. Specifically, log playback bandwidths of the M secondary devices may be obtained when the log backup is performed between the primary device and the M secondary devices, so that the data traffic information of the primary device is determined based on the consensus-reaching efficiency and the log playback bandwidth. The traffic is positively correlated with the log playback bandwidth. In other words, when other information remains unchanged, higher log playback bandwidths of the plurality of secondary devices indicate higher traffic of the data that is injected by the client and that is received by the primary device.

Log playback may be applying the log to a data system.

In a possible implementation, information about a plurality of logs, between the primary device and the M secondary devices in the historical sampling time period, on which consensus is reached and data playback is completed is obtained. The information about the plurality of logs, on which data playback is completed includes log sizes of the plurality of logs. In addition, the log playback bandwidth is determined based on the log sizes of the plurality of logs and the length of the historical sampling time period.

For example, when the primary device replicates the log to another secondary device, the another secondary device may reply with an acknowledgment ACK message, and an index of the log, of the secondary device, on which playback is performed is carried in the ACK message. The primary device may obtain indexes of logs, of all secondary devices, on which playback is performed. An overall system log playback bandwidth in a sampling cycle may be obtained based on the size of each log, and the overall system log playback bandwidth is denoted as bw2.

In a possible implementation, the historical sampling time period is a time period before and adjacent to the current moment; or the historical sampling time periods are a plurality of time periods before the current moment.

In a possible implementation, the data traffic information may include traffic control direction information and traffic control step information. The traffic control direction information indicates a change direction (for example, indicating whether the traffic becomes larger or smaller) of the traffic of the data that is injected by the client and that is received by the primary device. The traffic control step information indicates a change value of the traffic of the data that is injected by the client and that is received by the primary device, so that the traffic of the data that is injected by the client and that is received by the primary device may be determined based on the change direction of the traffic of the data and the traffic control step information, and further the traffic of the data that is injected by the client and that is received by the primary device may be controlled based on the data traffic information.

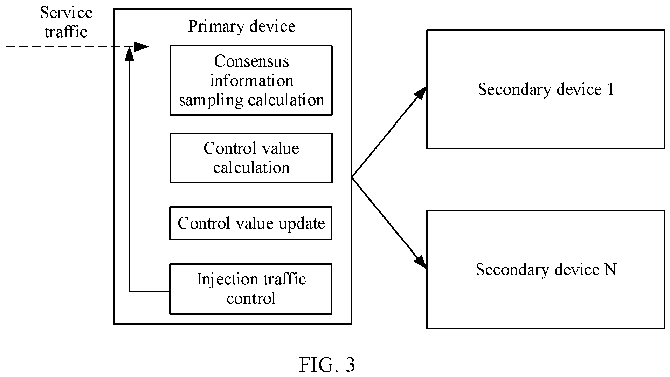

For example, refer to FIG. 3. Specific quantities of end-to-end consensus-reaching time overheads (lat), log bandwidths (bw1), and log playback bandwidths (bw2) in a historical sampling cycle (or a historical adjacent sampling cycle) may be recorded. Specific quantities of historical control values (ctrl_val), control directions (direction), and control steps (step) are recorded. Then, a new control direction (new_direction) and a new control step (new step) are calculated based on values of lat, bw1, and bw2 in the current sampling cycle, and results of a historical cycle. Finally, a new control value (new_ctrl_val) is calculated for adaptively controlling service injection traffic.

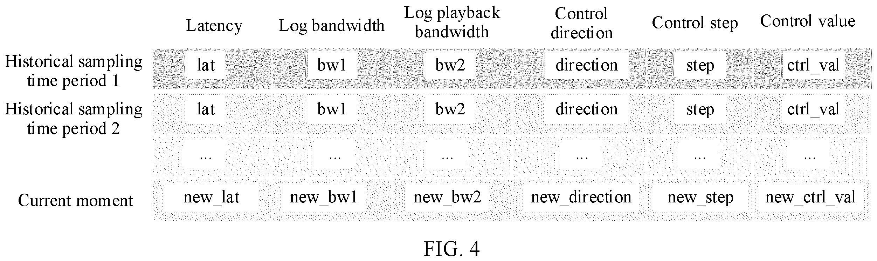

For example, as shown in FIG. 4, FIG. 4 shows recorded historical sampling results of lat, bw1, and bw2 of the specific quantity, the historical control values crtl_val, the control directions direction, and the control steps step, and sampling results of new_lat, new_bw1, and new_bw2 in the current sampling cycle. Initially, initial values may be set respectively for the control direction (direction) and the control value ctrl_val. The control direction (direction) may be divided into a positive direction and a negative direction. The new control direction new_direction may be obtained in the following manner: The latest sampling results of lat, bw1, and bw2 are compared with the historical results, and when performance deteriorates, the control direction is changed. Otherwise, an original control direction is maintained. The new control step new_step can be calculated based on a difference degree between the latest sampling results of lat, bw1, and bw2 and the historical results, and can be adjusted based on a value of the historical control value crtl_val. The new control value new_ctrl_val can be calculated according to the following formula: historical control value + new control direction * new control step.

Specifically, a test is performed in a 10 ms-network latency service scenario, and after the solution of the present invention is applied, 10 ms-service TPS performance can be improved by more than 10 times.

Refer to Table 1. Table 1 is a result of effect verification.

**Table 1**

| | 10 ms-service TPS performance |
|---|---|
| Solution without traffic control | 7386 |
| Solution of the present invention | 103487 |

In the conventional technology, traffic control is basically performed based on queue statistical information. A great quantity of parameters need to be configured in a method for performing flow control based on the queue statistical information. The parameters need to be adjusted in different scenarios, and control effect is uncertain. In embodiments of this application, optimal consensus-reaching efficiency (which includes, for example, an end-to-end consensus-reaching latency, and an end-to-end consensus-reaching log bandwidth) is used as a control target based on features of a consensus algorithm, to adaptively determine and control service injection traffic of the client, so that control effect is specific and stable. In the conventional technology (for example, MySQL group replication), the traffic control is performed based on a quota. All nodes periodically transmit information such as queue statistics to each other, and the traffic control is performed after each node calculates and processes the received queue statistical information. About 10 parameters are set for the MySQL group replication, and parameter adjustment needs to be performed for different scenarios. However, in embodiments of this application, a size of data transmission traffic may be controlled directly based on historical log data, parameters do not need to be adjusted, and implementation is easy.

The foregoing describes in detail the data processing method in embodiments of this application with reference to FIG. 2 to FIG. 4. The following describes a data processing apparatus provided in embodiments of this application from a perspective of a functional unit with reference to the accompanying drawings.

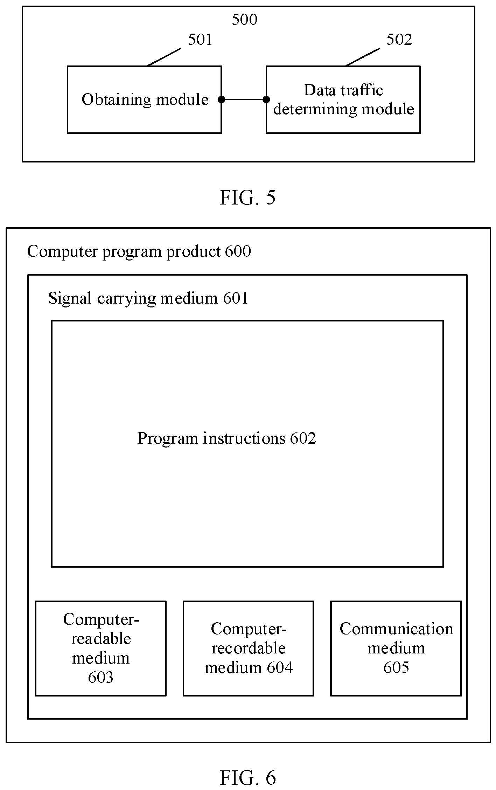

Refer to FIG. 5. FIG. 5 is a schematic diagram of a structure of a data traffic control apparatus according to an embodiment of this application. The data traffic control apparatus is used in a database system. The database system includes a primary device, the primary device is communicatively connected to M secondary devices and a client, and M is a positive integer. As shown in FIG. 5, an apparatus 500 may include:
an obtaining module 501, configured to obtain consensus-reaching efficiency when log backup is performed between the primary device and the M secondary devices, where the consensus-reaching efficiency is related to at least one of the following information: a consensus-reaching log bandwidth and a consensus-reaching time overhead, where
for a description of the obtaining module 501, refer to the description of step 201, and details are not repeated herein; and
a data traffic determining module 502, configured to determine data traffic information of the primary device based on the consensus-reaching efficiency, where the data traffic information is used to control traffic of data that is injected by the client and that is received by the primary device, and the traffic is positively correlated with the consensus-reaching efficiency, where
for a description of the data traffic determining module 502, refer to the description of step 202, and details are not repeated herein.

In a possible implementation, the consensus-reaching efficiency is positively correlated with the consensus-reaching log bandwidth, and the consensus-reaching efficiency is negatively correlated with the consensus-reaching time overhead.

In a possible implementation, the obtaining module 501 is further configured to:
obtain information about a plurality of logs, between the primary device and the M secondary devices in a historical sampling time period, on which consensus is reached, where the information about the plurality of logs includes log sizes of the plurality of logs; and
determine a bandwidth of a consensus operation based on the log sizes of the plurality of logs and a length of the historical sampling time period.

In a possible implementation, the obtaining module 501 is further configured to:
obtain the information about the plurality of logs, between the primary device and the M secondary devices in the historical sampling time period, on which consensus is reached, where the information about the plurality of logs, between the primary device and the M secondary devices in the historical sampling time period, on which consensus is reached includes a time overhead for each of the plurality of logs to reach consensus; and
determine a time overhead of the consensus operation based on the time overhead for each of the plurality of logs to reach consensus.

In a possible implementation, the obtaining module 501 is further configured to:
obtain log playback bandwidths of the M secondary devices when the log backup is performed between the primary device and the M secondary devices.

The data traffic determining module 502 is specifically configured to:
determine the data traffic information of the primary device based on the consensus-reaching efficiency and the log playback bandwidth, where the traffic is positively correlated with the log playback bandwidth.

In a possible implementation, the obtaining module 501 is specifically configured to:
obtain information about a plurality of logs, between the primary device and the M secondary devices in the historical sampling time period, on which consensus is reached and data playback is completed, where the information about the plurality of logs on which data playback is completed includes log sizes of the plurality of logs; and
determine the log playback bandwidth based on the log sizes of the plurality of logs and the length of the historical sampling time period.

In a possible implementation, the historical sampling time period is a sampling cycle in a plurality of sampling cycles before a current moment, and an interval between the sampling cycle and the current moment is less than a threshold; or historical sampling time periods are a plurality of sampling cycles before a current moment.

In a possible implementation, the data traffic information includes traffic control direction information and traffic control step information. The traffic control direction information indicates a change direction of the traffic of the data that is injected by the client and that is received by the primary device, and the traffic control step information indicates a change value of the traffic of the data that is injected by the client and that is received by the primary device.

An embodiment of this application provides the data traffic control apparatus. The data traffic control apparatus is used in the database system. The database system includes the primary device, the primary device is communicatively connected to the M secondary devices and the client, and M is the positive integer. The apparatus may include: the obtaining module, configured to obtain the consensus-reaching efficiency when the log backup is performed between the primary device and the M secondary devices, where the consensus-reaching efficiency is related to the at least one of the following information: the consensus-reaching log bandwidth and the consensus-reaching time overhead; and the data traffic determining module, configured to determine the data traffic information of the primary device based on the consensus-reaching efficiency, where the data traffic information is used to control the traffic of the data that is injected by the client and that is received by the primary device, and the traffic is positively correlated with the consensus-reaching efficiency. In this application, optimal consensus-reaching efficiency (which includes, for example, the end-to-end consensus-reaching latency, and the end-to-end consensus-reaching log bandwidth) is used as the control target based on the features of the consensus algorithm, to adaptively determine and control the service injection traffic of the client, so that control effect is specific and stable, parameters do not need to be adjusted, and implementation is easy.

Refer to FIG. 6. This application further provides a computer-readable storage medium. In some embodiments, the method disclosed in FIG. 2 may be implemented as computer program instructions encoded in a machine-readable format on a computer-readable storage medium or encoded on another non-transitory medium or product. FIG. 6 schematically shows a conceptual partial view of an example computer program product arranged according to at least some embodiments shown herein, and the example computer program product includes a computer program for executing a computer process on a computing device. In one embodiment, an example computer program product 600 is provided by using a signal carrying medium 601. The signal carrying medium 601 may include one or more program instructions 602. When the program instructions 602 are run by one or more processors, the program instructions 602 may provide functions or some functions described in FIG. 2. Therefore, for example, refer to the embodiment shown in FIG. 2, one or more features of step 201 and step 202 may be assumed by one or more instructions associated with the signal carrying medium 601. In addition, the program instructions 602 in FIG. 6 also describe example instructions.

In some examples, the signal carrying medium 601 may include a computer-readable medium 603, for example, including but not limited to a hard disk drive, a compact disc (CD), a digital video disc (DVD), a digital magnetic tape, a memory, a read-only memory (Read-Only Memory, ROM), or a random access memory (Random Access Memory, RAM). In some implementations, the signal carrying medium 601 may include a computer-recordable medium 604, for example, including but not limited to a memory, a read/write (R/W) CD, or an R/W DVD. In some implementations, the signal carrying medium 601 may include a communication medium 605, for example, including but not limited to a digital and/or analog communication medium (for example, an optical cable, a waveguide, a wired communication link, or a wireless communication link). Therefore, for example, the signal carrying medium 601 may be conveyed by a wireless-form communication medium 605 (for example, a wireless communication medium that complies with the IEEE 602.11 standard or another transmission protocol). The one or more program instructions 602 may be, for example, computer-executable instructions or logic implementation instructions. In some examples, a computing device may be configured to provide various operations, functions, or actions in response to the program instructions 602 transmitted to the computing device by using one or more of the computer-readable medium 603, the computer-recordable medium 604, and/or the communication medium 605. It should be understood that an arrangement described herein is merely used as an example. Therefore, it may be understood by persons skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable location in combination with another component.

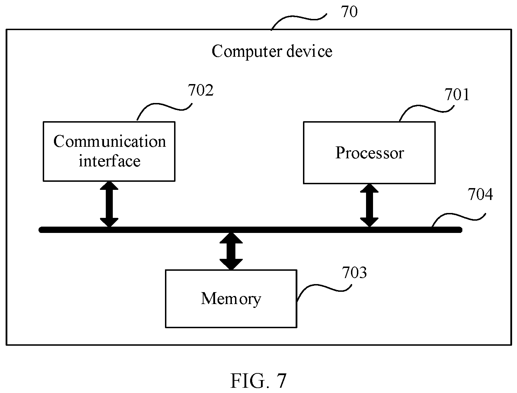

FIG. 7 is a schematic diagram of a possible logical structure of a computer device 70 in the foregoing embodiments according to an embodiment of this application. The computer device 70 may be the data traffic control apparatus 500 in FIG. 5. The computer device 70 includes a processor 701, a communication interface 702, a memory 703, and a bus 704. The processor 701, the communication interface 702, and the memory 703 are connected to each other through the bus 704. In this embodiment of this application, the processor 701 is configured to perform the steps in step 201 and step 202 in the embodiment in FIG. 2. The communication interface 702 is configured to support the computer device 70 in performing communication. For example, the communication interface 702 may perform steps related to receiving or sending in the foregoing method embodiments. The memory 703 is configured to store program code and data of a database server.

The processor 701 may be a central processing unit, a general-purpose processor, a digital signal processor, an application-specific integrated circuit, a field programmable gate array or another programmable logical device, a transistor logical device, a hardware component, or any combination thereof. The processor may implement or perform various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 704 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used for representation in FIG. 7, but this does not mean that there is only one bus or only one type of bus.

In another embodiment of this application, a chip system is further provided. The chip system includes a processor, configured to support a time series data injection apparatus or a time series data query apparatus in implementing the data traffic control method described in the foregoing embodiment in FIG. 2. In a possible design, the chip system further includes a memory. The memory is configured to store program instructions and data that are necessary for an apparatus used to manage data of an application. The chip system may include a chip, or may include a chip and another discrete device.

Persons of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of technical solutions. Persons skilled in the art may use different methods to implement the described functions for each particular application, but it should not be considered that the implementation goes beyond the scope of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by persons skilled in the art within the technical scope disclosed in embodiments of this application shall fall within the protection scope of embodiments of this application. Therefore, the protection scope of embodiments of this application should be subject to the protection scope of the claims.

## Claims

1. A data traffic control method, applied to a database system, wherein the database system comprises a primary device, the primary device is communicatively connected to M secondary devices and a client, M is a positive integer, and the method comprises:
obtaining consensus-reaching efficiency when log backup is performed between the primary device and the M secondary devices, wherein the consensus-reaching efficiency is related to at least one of the following information: a consensus-reaching log bandwidth and a consensus-reaching time overhead; and
determining data traffic information of the primary device based on the consensus-reaching efficiency, wherein the data traffic information is used to control traffic of data that is injected by the client and that is received by the primary device, and the traffic is positively correlated with the consensus-reaching efficiency.

2. The method according to claim 1, wherein the consensus-reaching efficiency is positively correlated with the consensus-reaching log bandwidth, and the consensus-reaching efficiency is negatively correlated with the consensus-reaching time overhead.

3. The method according to claim 1 or 2, wherein the method further comprises:
obtaining information about a plurality of logs, between the primary device and the M secondary devices in a historical sampling time period, on which consensus is reached, wherein the information about the plurality of logs comprises log sizes of the plurality of logs; and
determining a bandwidth of a consensus operation based on the log sizes of the plurality of logs and a length of the historical sampling time period.

4. The method according to any one of claims 1 to 3, wherein the method further comprises:
obtaining the information about the plurality of logs, between the primary device and the M secondary devices in the historical sampling time period, on which consensus is reached, wherein the information about the plurality of logs comprises a time overhead for each of the plurality of logs to reach consensus; and
determining a time overhead of the consensus operation based on the time overhead for each of the plurality of logs to reach consensus.

5. The method according to any one of claims 1 to 4, wherein the method further comprises:
obtaining log playback bandwidths of the M secondary devices when the log backup is performed between the primary device and the M secondary devices; and
the determining data traffic information of the primary device based on the consensus-reaching efficiency comprises:
determining the data traffic information of the primary device based on the consensus-reaching efficiency and the log playback bandwidth, wherein the traffic is positively correlated with the log playback bandwidth.

6. The method according to claim 5, wherein the obtaining log playback bandwidths of the M secondary devices when the log backup is performed between the primary device and the M secondary devices comprises:
obtaining information about a plurality of logs, between the primary device and the M secondary devices in the historical sampling time period, on which consensus is reached and data playback is completed, wherein the information about the plurality of logs, between the primary device and the M secondary devices in the historical sampling time period, on which consensus is reached and data playback is completed comprises log sizes of the plurality of logs; and
determining the log playback bandwidth based on the log sizes of the plurality of logs and the length of the historical sampling time period.

7. The method according to any one of claims 1 to 6, wherein the historical sampling time period is a sampling cycle in a plurality of sampling cycles before a current moment, and an interval between the sampling cycle and the current moment is less than a threshold; or historical sampling time periods are a plurality of sampling cycles before a current moment.

8. The method according to any one of claims 1 to 7, wherein the data traffic information comprises traffic control direction information and traffic control step information, the traffic control direction information indicates a change direction of the traffic of the data that is injected by the client and that is received by the primary device, and the traffic control step information indicates a change value of the traffic of the data that is injected by the client and that is received by the primary device.

9. A data traffic control apparatus, used in a database system, wherein the database system comprises a primary device, the primary device is communicatively connected to M secondary devices and a client, M is a positive integer, and the apparatus comprises:
an obtaining module, configured to obtain consensus-reaching efficiency when log backup is performed between the primary device and the M secondary devices, wherein the consensus-reaching efficiency is related to at least one of the following information: a consensus-reaching log bandwidth and a consensus-reaching time overhead; and
a data traffic determining module, configured to determine data traffic information of the primary device based on the consensus-reaching efficiency, wherein the data traffic information is used to control traffic of data that is injected by the client and that is received by the primary device, and the traffic is positively correlated with the consensus-reaching efficiency.

10. The apparatus according to claim 9, wherein the consensus-reaching efficiency is positively correlated with the consensus-reaching log bandwidth, and the consensus-reaching efficiency is negatively correlated with the consensus-reaching time overhead.

11. The apparatus according to claim 9 or 10, wherein the obtaining module is further configured to:
obtain information about a plurality of logs, between the primary device and the M secondary devices in a historical sampling time period, on which consensus is reached, wherein the information about the plurality of logs comprises log sizes of the plurality of logs; and
determine a bandwidth of a consensus operation based on the log sizes of the plurality of logs and a length of the historical sampling time period.

12. The apparatus according to any one of claims 9 to 11, wherein the obtaining module is further configured to:
obtain the information about the plurality of logs, between the primary device and the M secondary devices in the historical sampling time period, on which consensus is reached, wherein the information about the plurality of logs comprises a time overhead for each of the plurality of logs to reach consensus; and
determine a time overhead of the consensus operation based on the time overhead for each of the plurality of logs to reach consensus.

13. The apparatus according to any one of claims 9 to 12, wherein the obtaining module is further configured to:
obtain log playback bandwidths of the M secondary devices when the log backup is performed between the primary device and the M secondary devices; and
the data traffic determining module is specifically configured to:
determine the data traffic information of the primary device based on the consensus-reaching efficiency and the log playback bandwidth, wherein the traffic is positively correlated with the log playback bandwidth.

14. The apparatus according to claim 13, wherein the obtaining module is specifically configured to:
obtain information about a plurality of logs, between the primary device and the M secondary devices in the historical sampling time period, on which consensus is reached and data playback is completed, wherein the information about the plurality of logs, between the primary device and the M secondary devices in the historical sampling time period, on which consensus is reached and data playback is completed comprises log sizes of the plurality of logs; and
determine the log playback bandwidth based on the log sizes of the plurality of logs and the length of the historical sampling time period.

15. The apparatus according to any one of claims 9 to 14, wherein the historical sampling time period is a sampling cycle in a plurality of sampling cycles before a current moment, and an interval between the sampling cycle and the current moment is less than a threshold; or historical sampling time periods are a plurality of sampling cycles before a current moment.

16. The apparatus according to any one of claims 9 to 15, wherein the data traffic information comprises traffic control direction information and traffic control step information, the traffic control direction information indicates a change direction of the traffic of the data that is injected by the client and that is received by the primary device, and the traffic control step information indicates a change value of the traffic of the data that is injected by the client and that is received by the primary device.

17. A data traffic control apparatus, wherein the apparatus comprises at least one processor, a memory, and instructions that are stored in the memory and that are executed by the at least one processor, and the at least one processor executes the instructions, to implement steps of the method according to any one of claims 1 to 8.

18. A computer-readable storage medium, storing a computer program, wherein when the program is executed by a computer, the method according to any one of claims 1 to 8 is implemented.

19. A computer program product, comprising computer-readable instructions, wherein when the computer-readable instructions are run on a computer, the computer is enabled to perform the method according to any one of claims 1 to 8.
